# EUROPÄISCHE PATENTSCHRIFT

(11) **EP 1 455 409 B1**
(45) Veröffentlichungstag und Bekanntmachung des Hinweises auf die Patenterteilung: **14.12.2005**
(21) Anmeldenummer: 04405036.7
(22) Anmeldetag: 20.01.2004
(51) Int. Cl.: H01M 8/12, H01M 8/24, H01M 8/04

(54) **Batterie mit miniaturisierten SOFC-Brennstoffzellen**
Miniature solid oxide fuel cell battery
Pile à combustible à oxyde solide miniaturisée

(30) Priorität: 18.02.2003 EP 03405091
(43) Veröffentlichungstag der Anmeldung: 08.09.2004
(73) Patentinhaber: Cerion AG, 8049 Zürich (CH)
(72) Erfinder: Robert, Gilles Dr., 8008 Zürich (CH)
(74) Vertreter: Breiter, Heinz

(56) Entgegenhaltungen:
- WO-A-00/45457
- US-A- 5 641 585
- US-A1- 2003 012 994

## Beschreibung

Die Erfindung betrifft eine Batterie mit miniaturisierten SOFC-Brennstoffzellen (SOFC: Solid Oxid Fuel Cell). Die Batterie enthält die Brennstoffzellen in Form einer multimodularen Einheit, insbesondere in Form eines Stapels, dessen Volumen vorzugsweise kleiner als 10⁻⁴ m³ ist. Die Erfindung bezieht sich auch auf Verfahren zum Betreiben sowie auf Verwendungen der Batterie.

Elektronische Geräte, die portabel sind, befinden sich in einer Entwicklung, bei der diese Geräten zunehmend komplexer werden sowie in immer komplexere Systeme eingebunden werden. Aufgrund der Zunahme der Komplexität wird auch der Bedarf an elektrischer Energie zum Betreiben der Geräte bzw. Systeme laufend grösser. Die gebräuchlichen Batterien, die wiederaufladbar sind, gelangen an Kapazitätsgrenzen. Es sind daher Batterien mit miniaturisierten Brennstoffzellen vorgeschlagen worden, mit denen die genannten Kapazitätsgrenzen überschritten werden können. Da solche Batterien relativ klein sein müssen, ist es schwierig, elektrochemische Prozesse zu nutzen, die bei hohen Temperaturen ablaufen. Es werden daher miniaturisierte Brennstoffzellen entwickelt, die bei niedrigen Temperaturen mit Polymer-Membranen arbeiten (Zellen des Typs PEMFC: Proton Exchange Membrane Fuel Cell). In solchen Membranen muss aber ein minimaler Wassergehalt aufrecht erhalten werden. Dieses Erfordernis ist schwer zu erfüllen. Als Brennstoff wird Wasserstoff verwendet, was hinsichtlich einer Speicherung von Nachteil ist, da mit gespeichertem Wasserstoff nur relativ kleine Energiedichten möglich sind.

Wegen den Problemen mit den PEMFC-Brensstoffzellen sind trotz den bekannten Schwierigkeiten auch SOFC-Brennstoffzellen vorgeschlagen worden (siehe z.B. WO 0243177). Bei diesen sind Membranen aus Festelektrolyten gebildet, die erst bei Temperaturen grösser als 500°C eine genügend hohe Ionenleitfähigkeit haben. Als Brennstoffe können beispielsweise Propan oder Butan verwendet werden, die in verflüssigter Form vorteilhafterweise relativ hohe Energiedichten aufweisen.

Aufgabe der Erfindung ist es, eine weitere Batterie mit miniaturisierten SOFC-Brennstoffzellen zu schaffen, die sich als eine mobile Quelle von elektrischer Energie verwenden lässt. Diese Aufgabe wird durch die im Anspruch 1 definierte Batterie gelöst.

Die Batterie mit miniaturisierten SOFC-Brennstoffzellen umfasst folgende Komponenten: Einen aus den Brennstoffzellen zusammengesetzten Stapel oder eine andere multimodulare Einheit, mit einem Volumen, das kleiner als 10⁻³ m³, vorzugsweise kleiner als 10⁻⁴ m³ ist; ein Kanalsystem, in dessen Kanälen einerseits Reaktanden, nämlich gasförmiger Brennstoff sowie Luft, zu den Zellen zuführbar sind und andererseits eine Nachverbrennung des in den Zellen teilweise erschöpften Brennstoffs durchführbar ist; eine Hülle, die zumindest teilweise wärmedämmend ausgebildet ist; einen Wärmetauscher, der Teil des Kanalsystems ist und in dem die zugeführte Luft mit Abgas aufheizbar ist; eine Einrichtung zum Fördern der Luft; ein austauschbares oder nachfüllbares Reservoir für den Brennstoff, der in diesem bei einem Druck gespeichert ist, der grösser als der Umgebungsdruck ist und bei dem der Brennstoff vorzugsweise flüssig ist; gesteuerte Ventile in Verbindungsleitungen für die Reaktanden; ferner eine Steuerung. Die Nachverbrennung ist nicht notwendigerweise erforderlich. Die Brennstoffzellen enthalten jeweils einen scheibenförmigen Festelektrolyten, der neben ionenleitenden auch elektronenleitende, einen ohmschen Verlust verursachenden Komponenten umfasst. Dabei ist das Mengenverhältnis dieser Komponenten so ausgelegt, dass in einem Leerlaufbetrieb der Batterie ein Wärmeabfluss aus den Zellen an die Umgebung durch den ohmschen Verlust kompensierbar ist.

Die abhängigen Ansprüche 2 bis 6 betreffen vorteilhafte Ausführungsformen der erfindungsgemässen Batterie. Verfahren zum Betreiben der erfindungsgemässen Batterie sind jeweils Gegenstand der Ansprüche 7 bis 8. Der Anspruch 9 bezieht sich auf eine Verwendung der Batterie.

Nachfolgend wird die Erfindung anhand der Zeichnungen erläutert. Es zeigen:
- Fig. 1: eine Übersicht über die Komponenten einer erfindungsgemässen Batterie,
- Fig. 2: einen Querschnitt durch einen Teil einer Brennstoffzelle,
- Fig. 3: ein Schema zu den elektrischen Verbindungen der Zellen,
- Fig. 4: einen Ausschnitt eines Zellenstapels mit Sicht auf die Anode,
- Fig. 5: einen Ausschnitt eines Zellenstapels mit Sicht auf die Katode und
- Fig. 6: eine Einrichtung zum Fördern der Luft.

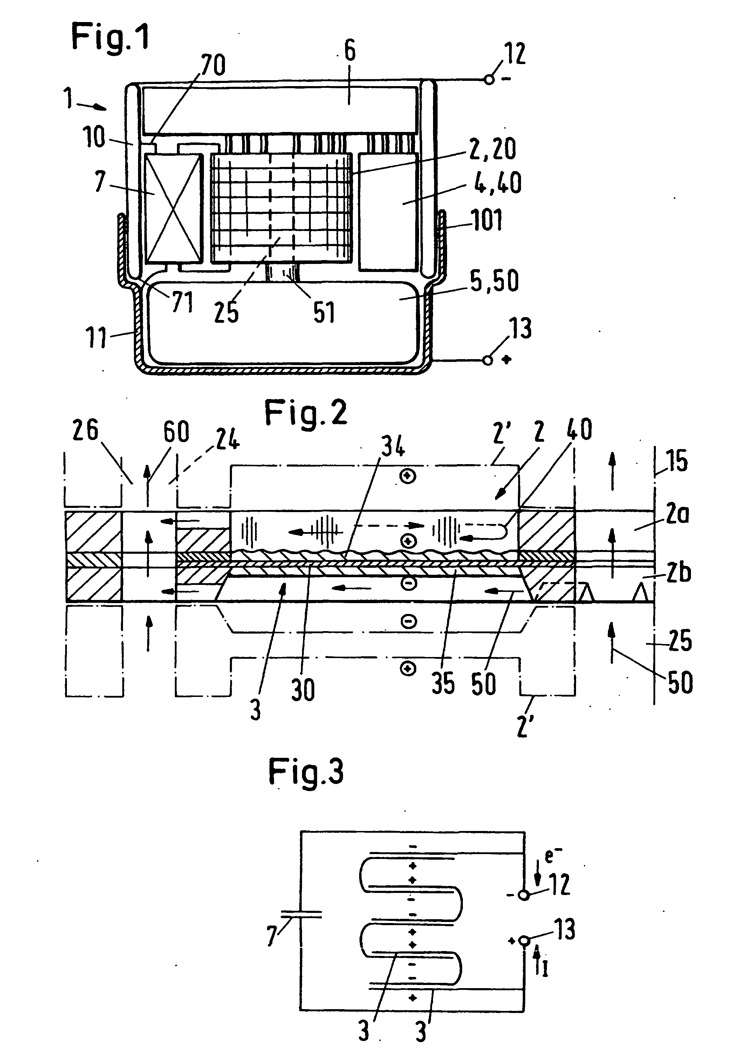

Die in Fig. 1 gegebene Übersicht zeigt folgende Komponenten einer erfindungsgemässen Batterie 1: Einen zylindrischen Stapel 20 mit Brennstoffzellen 2; eine Einrichtung 4 zum Fördern von Luft 40; einen wärmedämmenden Hüllenteil 10, der als Längsschnitt dargestellt ist; ein austauschbares oder nachfüllbares Reservoir 5 für einen Brennstoff 50; einen Wärmetauscher 6; einen Kondensator 7; einen schalenartigen Hüllenteil 11, der auf den wärmedämmenden Hüllenteil 10 aufsteckbar ist (Steckbereich 101). Die Hüllenteile 10 und 11 werden vorteilhafterweise aus Metall gefertigt. Werden die Hüllenteile 10 und 11 im Steckbereich 101 mit einer Isolation elektrisch getrennt, so lassen sie sich - bei geeigneten Anschlüssen 70 und 71 an den Kondensator 7 (beispielsweise) - als Pole 12 und 13 der Batterie verwenden.

Die Brennstoffzellen 2 können statt eines Stapels 20 auch eine andere multimodulare Einheit bilden. In einer solchen multimodularen Einheit können die Zellen 2 beispielsweise in einer Lage oder mindestens einer Lage nebeneinander angeordnet sein (nicht dargestellt).

Der Brennstoff 50 (Fig. 2) kann durch ein steuerbares Ventile 51 aus dem Reservoir 5 in ein zentrales Verteilrohr 25 des Zellstapels 20 eingelassen werden. Die Batteriekomponente für eine Steuerung ist nicht dargestellt. Das Reservoir 5 ist austauschbar oder nachfüllbar. Der Brennstoff 50 ist bei einem Druck gespeichert, der grösser als der Umgebungsdruck ist und bei dem der Brennstoff 50 vorzugsweise als eine flüssige Phase vorliegt. Die erfindungsgemässe Batterie 1 umfasst ein Kanalsystem, in dessen Kanälen einerseits die Reaktanden, nämlich der gasförmige Brennstoff 50 sowie die Luft 40, zu den Zellen 2 zuführbar sind und andererseits eine Nachverbrennung des in den Zellen 2 teilweise erschöpften Brennstoffs durchführbar ist. Die Nachverbrennung lässt sich katalytisch bei Temperaturen höher als 250°C durchführen.

Beim beschriebenen Ausführungsbeispiel ist der Festelektrolyt kreisförmig. Der Zellstapel 20 kann auch prismatisch ausgebildet sein, beispielsweise mit einer quadratischen Grundfläche, so dass der Festelektrolyt entsprechend eine quadratische Form haben muss. Statt der separaten Einrichtung 4 zum Fördern von Luft 40 sind auch andere Transportmittel möglich, nämlich beispielsweise ein System von im Zellstapel 20 integrierten Düsen, in dem der gasförmige Brennstoff mit dessen Druck als treibender Kraft für den Lufttransport verwendbar ist.

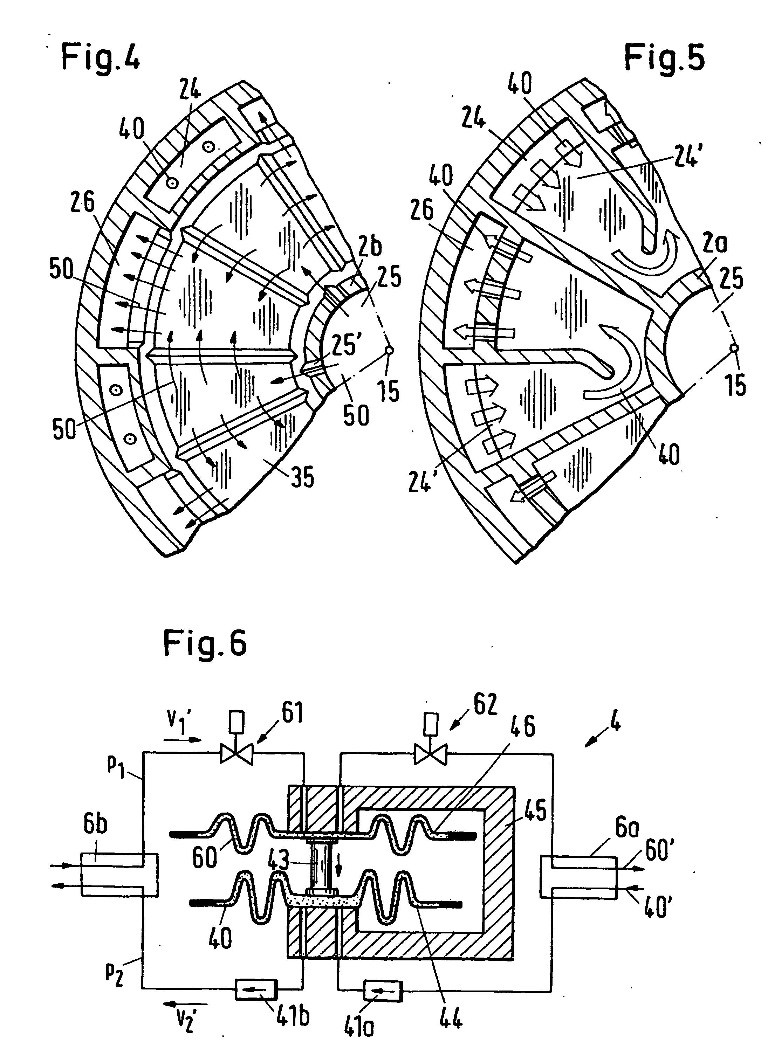

In Fig. 2 ist als Querschnitt ein links von einer Mittellinie 15, d. h. der Zentralachse des Stapels 20 liegender Teil der Brennstoffzelle 2 gezeigt. Diese Zelle besteht aus einem ersten strukturierten Teil 2a, einem zweiten strukturierten Teil 2b und einem elektrochemisch aktiven Element 3, das eine Membran 30 aus einem Festelektrolyten sowie zwei schichtförmige Elektroden, nämlich eine Katode 34 und eine Anode 35 umfasst. In den Figuren 4 und 5 ist die Architektur der beiden Teile 2a und 2b ersichtlich. Sie bilden mechanisch stabile Stützstrukturen für die Festelektrolyt-Membranen 30, die homogen und unstruktiert sind, und können vorzugsweise aus monokristallinem Silicium hergestellt werden. Dieser Werkstoff wird mittels mikrotechnischen Methoden, insbesonder Ätzverfahren strukturiert (z. B. "back-etching" des anodenseitigen Teils 2b. Siehe beispielsweise die bereits genannte WO 0243177).

Benachbarte Zellen 2 und 2' (strichpunktiert dargestellt) sind jeweils spiegelsymmetrisch so zu einander angeordnet, dass gleichnamige Elektroden 34 bzw. 35 innere Oberflächen von gemeinsamen Elektroden-Gasräumen für die Luft 40 bzw. für den Brennstoff 50 auskleiden. Die Fig. 3 zeigt, wie bei dieser Anordnung die Elektroden 34 bzw. 35 elektrisch miteinander verbunden werden müssen, um eine serielle Schaltung zu erhalten, für welche die Klemmenspannung zwischen den Polen 12 und 13 gleich der Summe der Einzelspannungen der elektrochemisch aktiven Elementen 3 ist.

Im Betrieb der Batterie wird die Luft 40 durch axiale Kanäle 24 verteilt, die im Peripheriebereich der Zellen 2 angeordnet sind: siehe Figuren 2 und 5. Die Luft 40 strömt in den Zellen 2 zuerst von Einspeisestellen 24' radial gegen die Zentralachse 15 und wird danach zurück zur Peripherie gelenkt. Aus der Luft 40 nimmt die Katode 34 Sauerstoff auf, der unter Aufnahme von Elektronen (e⁻) zu negativ geladenen Sauerstoffionen reagiert. Die Sauerstoffionen wandern durch die Festelektrolyt-Membran 30 zur Anode 35, wo sie mit dem Brennstoff 50 unter Abgabe der überschüssigen Elektronen zu Wasser H₂O und CO₂ reagieren. Der Brennstoff 50, der über den zentralen Kanal 25 verteilt wird, gelangt durch radiale Kanäle 25' in die mit den Anoden 35 ausgekleideten Elektroden-Gasräume: siehe Figuren 2 und 4. Nach dem Transport durch die Elektroden-Gasräume treten die Luft 40 und der Brennstoff 50 in gemeinsame Kanäle 26 ein, die zwischen den Luftkanälen 24 axial angeordnet sind und in denen eine Nachverbrennung des nur teilweise erschöpften Brennstoffs 50 zu einem heissen Abgas 60 stattfindet.

Der scheibenförmige Festelektrolyt 30 enthält erfindungsgemäss neben ionenleitenden auch elektronenleitende, einen ohmschen Verlust verursachende Komponenten. Das Mengenverhältnis dieser Komponenten ist so ausgelegt ist, dass in einem Leerlaufbetrieb der Batterie 1 ein Wärmeabfluss aus den Zellen an die Umgebung durch den ohmschen Verlust kompensierbar ist. Bei einem fehlenden Bedarf an elektrischer Leistung wird die Einspeisung der Reaktanden 40, 50 in die Brennstoffzellen 2 auf einem niedrigen Niveau aufrecht erhalten, so dass in diesem Leerlaufbetrieb die Temperatur in den Zellen 2 weiterhin hoch bleibt. Diese Temperatur soll so hoch sein, dass ein Übergang vom Leerlaufbetrieb in den energieliefernden Normalbetrieb innert einer vorgegebenen Zeitdauer möglich ist. Diese Zeitdauer beträgt beispielsweise zehn Minuten, vorzugsweise weniger als eine Minute. Im energieliefernden Betrieb (elektrische Leistung rund 1 W; Wärmeleistung rund 1.5 W) soll die Aussenseite der Batterie 1 nicht wärmer als rund 30°C und im Leerlaufbetrieb (elektrische Leistung rund 0.05 W; Wärmeleistung rund 0.3 W) weniger warm, beispielsweise 25°C sein. Im Leerlaufbetrieb ist also die Temperatur der Zellen 2 kleiner als im energieliefernden Normalbetrieb. Die Differenz zwischen den Temperaturen im Normalbetrieb und im Leerlaufbetrieb ist vorzugsweise kleiner als 100 K.

Der mischleitende Festelektrolyt kann aus Sr₄Fe₆O₁₃ bestehen, das mit La und/oder Ti dotiert ist; er kann ein Perowskit der Zusammensetzung (La, Sr)(Co, Fe)O₃ sein; oder vorzugsweise Ceroxid, CeO_{2-ε} (ε ≤ 0.2), das mit Gd, Y und/oder Sm dotiert ist. Die Überführungszahl der Sauerstoffionen beim simultanen Transport von Sauerstoffionen und Elektronen muss einen Wert zwischen 0.6 und 0.9 annehmen. (Die Überführungszahl - engl. "transference number" - gibt das Verhältnis zwischen dem Strom der Sauerstoffionen und jenem der Elektronen an.) Dabei muss die Überführungszahl bei Betriebstemperatur gemessen werden.

Die erfindungsgemässe Batterie umfasst mit Vorteil einen Kondensator 7, insbesondere einen Superkondensator (siehe Figuren 1 und 3), mittels dem Spitzen des Leistungsbedarfs, die in der Regel intermittierend auftreten, abdeckbar sind.

Der Brennstoff 50 ist mit Vorteil Butan oder Propan. Die Batterie 1 weist eine durch die Brennstoffmenge gegebene Kapazität auf. Bei vollem Brennstoffreservoir 5 beträgt die Kapazität der Batterie 1 mindestens 3000 mAh. Die in Serie geschaltenen Brennstoffzellen 2 erzeugen eine Klemmenspannung von 3.6 V. Die Batterie hat einen Durchmesser zwischen 2 und 3 cm und eine Höhe zwischen 2.5 und 3.5 cm.

Fig. 6 zeigt in schematischer Darstellung eine Einrichtung 4 zum Fördern der Luft 40, die an einer Eintrittsstelle 40' angesaugt wird. Zum Ansaugen werden zwei verschieden grosse Behälter 44 und 46 verwendet, die balgartig ausgebildet sind, die durch starre Verbindungen 43 und 45 gekoppelt sind und deren Volumina jeweils zwischen einem minimalen Volumen, das praktisch Null ist, und einem maximalen Volumen geändert werden können.

Die Volumina ändern gegenläufig. In einem ersten Schritt wird der grössere Behälter 46 mit Abgas 60 aus der Batterie 1 gefüllt: Ventil 61 offen; Ventil 62 geschlossen; Volumenstrom V₁'; Druck p₁. Aus dem kleineren, starr gekoppelten Behälter 44 wird Luft 40 in die Batterie 1 gefördert: Rückschlagventil 41 a geschlossen; Rückschlagventil 41b offen; Volumenstrom V₂'; Druck p₂. Dabei ist V₂' < V₁'; p₂ > p₁. Der Innendruck der Batterie, p₁, ist grösser als der Umgebungsdruck. In der Batterie 1 nimmt die Luft 40 Wärme auf, wobei eine Volumenvergösserung und Druckerhöhung erfolgt. Die chemischen Reaktionen, die in der Batterie stattfinden (Elektrodenreaktionen, Nachverbrennung) tragen ebenfalls zur Volumenvergösserung und Druckerhöhung bei. In einem zweiten Schritt wird der grössere Behälter 46 entleert: Ventil 61 geschlossen; Ventil 62 offen. Damit gekoppelt wird aus der Umgebung Luft 40 durch den Behälter 44 angesaugt. Das Abgas 60 verlässt an einer Austrittstelle 60' die Einrichtung 4. Die zugeführte Luft 40 wird in zwei Wärmetauschern 6a und 6b mit dem im Gegenstrom transportierten Abgas 60 vorgewärmt.

Es sind weitere Mechanismen zum Einspeisen der Luft 40 in die Elektroden-Gasräume möglich. Es gilt dabei allgemein: In den mit Gasen gefüllten Brennstoffzellen 2 und Kanälen wird mittels Organen, mit denen auf den Tansport der Luft und des Abgases einwirkbar ist, ein Überdruck p₂ bzw. p₁ erzeugt. Dabei bewirkt die zugeführte Luft als Wärmesenke sowie als Reaktand zusammen mit dem Brennstoff eine thermodynamische Arbeitsleistung an den Gasen. Ein Teil der Druckenergie, die im Abgas gespeichert ist, wird dabei durch die Einrichtung zum Fördern der Luft genutzt. Ein weiteres Beispiel für eine derartige Fördervorrichtung ist eine "Quasi-Gasturbine": Mit einer ersten Mikroturbine wird Luft angesaugt. Mit einer zweiten Mikroturbine wird die erste angetrieben. Über die zweite Mikroturbine strömt das Abgas unter einer Arbeitsleistung ab. Die Reaktions- und Verbrennungsräume der Batterie haben dabei die Funktion einer Verbrennungskammer bei einer Gasturbine. Ein Herstellungsverfahren für Mikroturbinen ist in der US-A- 6 363 712 (Sniegowski et al.) beschrieben.

Die erfindungsgemässe Batterie 1 ist als mobile Energiequelle für elektronische Geräte verwendbar, die eine relativ hohe und regelmässige Energiezufuhr erfordern. Sie lässt sich auch zu einer Substitution von wiederaufladbaren Batterien verwenden.

## Patentansprüche

1. Batterie mit miniaturisierten SOFC-Brennstoffzellen, folgende Komponenten umfassend:
eine mit den Brennstoffzellen (2) als Modulen gebildete multimodulare Einheit (20), deren Volumen kleiner als 10⁻³ m³, vorzugsweise kleiner als 10⁻⁴ m³ ist,
ein Kanalsystem (24, 25, 26), in dessen Kanälen einerseits Reaktanden, nämlich gasförmiger Brennstoff (50) sowie Luft (40), zu den Zellen (2) zuführbar sind und andererseits der in den Zellen teilweise erschöpfte Brennstoff nachverbrannt werden kann,
eine Hülle (10, 11), die zumindest teilweise wärmedämmend ausgebildet ist,
einen Wärmetauscher (6), der Teil des Kanalsystems ist und in dem die zugeführte Luft mit Abgas (60) aufheizbar ist,
eine Einrichtung (4) oder Mittel zum Fördern der Luft,
ein austauschbares oder nachfüllbares Reservoir (5) für den Brennstoff, der in diesem bei einem Druck gespeichert ist, der grösser als der Umgebungsdruck ist und bei dem der Brennstoff vorzugsweise flüssig ist,
gesteuerte Ventile (51) in Verbindungsleitungen für die Reaktanden und
eine Steuerung,
wobei die Brennstoffzellen jeweils einen scheibenförmigen Festelektrolyten (30) enthalten, der neben ionenleitenden auch elektronenleitende, einen ohmschen Verlust verursachenden Komponenten umfasst und das Mengenverhältnis dieser Komponenten so ausgelegt ist, dass in einem Leerlaufbetrieb der Batterie ein Wärmeabfluss aus den Zellen an die Umgebung durch den ohmschen Verlust kompensierbar ist.

2. Batterie nach Anspruch 1, **dadurch gekennzeichnet, dass** der Festelektrolyt aus Sr₄Fe₆O₁₃ dotiert mit La und/oder Ti besteht, dass er ein Perowskit der Zusammensetzung (La, Sr)(Co, Fe)O₃ ist oder dass er mit Gd, Y und/oder Sm dotiertes Ceroxid ist, wobei die bei Betriebstemperatur gemessene Überführungszahl der Sauerstoffionen beim simultanen Transport der Sauerstoffionen und Elektronen einen Wert zwischen 0.6 und 0.9 hat, und dass mechanisch stabile Stützstrukturen (2a, 2b) für die scheibenförmigen Festelektrolyte aus kristallinem Silicium hergestellt sind, das mittels mikrotechnischen Methoden strukturiert worden ist.

3. Batterie nach Anspruch 1 oder 2, **dadurch gekennzeichnet, dass** sie einen Kondensator (7), insbesondere einen Superkondensator umfasst, mittels dem Spitzen des Leistungsbedarfs, die in der Regel intermittierend auftreten, abdeckbar sind und dass der Kondensator zumindest teilweise eine Wärmedämmung in der Hülle (10) herstellt.

4. Batterie nach einem der Ansprüche 1 bis 3, **dadurch gekennzeichnet, dass** in den mit Gasen gefüllten Brennstoffzellen (2) und Kanälen mittels Organen (44, 46, 61, 62), mit denen auf den Tansport der Luft (40) und des Abgases (60) einwirkbar ist, sich ein Überdruck erzeugen lässt, wobei die zugeführte Luft als Wärmesenke sowie als Reaktand zusammen mit dem Brennstoff (50) eine thermodynamische Arbeitsleistung an den Gasen bewirkt und in der Einrichtung (4) zum Fördern der Luft ein Teil der Druckenergie, die im Abgas gespeichert ist, genutzt wird.

5. Batterie nach einem der Ansprüche 1 bis 4, **dadurch gekennzeichnet, dass** der Brennstoff (50) Butan oder Propan ist.

6. Batterie nach einem der Ansprüche 1 bis 5, **dadurch gekennzeichnet, dass** sie eine durch die Brennstoffmenge gegebene Kapazität aufweist, dass bei vollem Brennstoffreservoir (5) die Kapazität der Batterie (1) mindestens 3000 mAh beträgt, dass die in Serie geschaltenen Brennstoffzellen (2) eine Klemmenspannung von 3.6 V erzeugen und dass die Batterie einen Durchmesser zwischen 2 und 3 cm und eine Höhe zwischen 2.5 und 3.5 cm hat.

7. Verfahren zum Betreiben der Batterie gemäss einem der Ansprüche 1 bis 6, **dadurch gekennzeichnet, dass** bei einem fehlenden Bedarf an elektrischer Leistung die Einspeisung der Reaktanden (40, 50) in die Brennstoffzellen (2) auf einem niedrigen Niveau aufrechterhalten erhalten wird, so dass in diesem Leerlaufbetrieb die Temperatur in den Zellen weiterhin hoch bleibt, nämlich so hoch, dass ein Übergang vom Leerlaufbetrieb in einen energieliefernden Normalbetrieb innert einer vorgegebenen Zeitdauer möglich ist, wobei diese Zeitdauer beispielsweise 10 Minuten, vorzugsweise weniger als 1 Minute beträgt.

8. Verfahren nach Anspruch 7 **dadurch gekennzeichnet, dass** im Leerlaufbetrieb die Temperatur der Zellen (2) kleiner als im energieliefernden Normalbetrieb ist und dass die Differenz zwischen den Temperaturen im Normalbetrieb und im Leerlaufbetrieb vorzugsweise kleiner als 100 K ist.

9. Verwendung der Batterie gemäss einem der Ansprüche 1 bis 6, **dadurch gekennzeichnet, dass** sie als mobile Energiequelle für elektronische Geräte dient, die eine relativ hohe und regelmässige Energiezufuhr erfordern, und/oder dass sie zu einer Substitution von wiederaufladbaren Batterien dient.

## Claims

1. Battery with miniaturised SOFC fuel cells, including the following components:
a multi-modular unit (20) formed with the fuel cells (2) as modules, the volume of which is less than 10⁻³m³, preferably less than 10⁻⁴m³, a channel system (24, 25, 26) in the channels of which reactants, on the one hand, namely gaseous fuel (50) and also air (40) can be fed to the cells (2) and, on the other hand, the fuel which is partially depleted in the cells can be subjected to afterburning,
a casing (10, 11), which is at least partially made heat insulating,
a heat exchanger (6) which is part of the channel system and in which the air supplied can be heated up with exhaust gas (60),
an apparatus (4) or means for feeding the air,
an exchangeable or refillable reservoir (5) for the fuel, which is stored in this at a pressure which is greater than the environmental pressure and in which the fuel is preferably liquid,
controlled valves (51) in connection lines for the reactants and a control,
wherein the fuel cells respectively contain a disc-shaped solid electrolyte (30), which in addition to ion conducting components also includes electron conducting components which cause an ohmic loss and wherein the quantity ratio of these components is so designed that in an idling operation of the battery a heat flow from the cells to the environment can be compensated by the ohmic loss.

2. A battery in accordance with claim 1, **characterised in that** the solid electrolyte is made up of Sr₄Fe₆O₁₃ doped with La and/or Ti, that it is a perovskite of the composition (La, Sr)(Co, Fe)O₃ or that it is cer-oxide doped with Gd, Y and/or Sm, wherein the transfer number of the oxygen ions measured at the operating temperature with simultaneous transport of the oxygen ions and electrons has a value between 0.6 and 0.9 and **in that** mechanically stable support structures (2a, 2b) for the disc-shaped solid electrolytes are manufactured from crystalline silicon, which is structured by means of micro-technical methods.

3. A battery in accordance with claim 1 or claim 2, **characterised in that** it includes a condenser (7), in particular a super condenser, by means of which peaks of the power requirement, which occur intermittently are covered and that the condenser at least partially produces a heat insulation in the casing (10).

4. A battery in accordance with one of the claims 1 to 3, **characterised in that** an overpressure is produced in the gas-filled fuel cells (2) and channels by means of organs (44, 46, 61, 62) with which the transport of the air (40) and of the exhaust gas (60) can be affected, wherein the air supplied as a negative source of heat and also as a reactant together with the fuel (50) effects a thermodynamic working performance on the gases and a part of the pressure energy, which is stored in the exhaust gas, is used in the apparatus (4) for supplying the air.

5. A battery in accordance with one of the claims 1 to 4, **characterised in that** the fuel (50) is butane or propane.

6. A battery in accordance with one of the claims 1 to 5, **characterised in that** it has a capacity given by the amount of fuel, that when the fuel reservoir (5) is full the capacity of the battery (1) amounts to at least 3,000 mAh, that the fuel cells (2) switched in series produce a terminal voltage of 3.6V and that the battery has a diameter of between 2 and 3 cm and a height of between 2,5 and 3, 5 cm.

7. A method for operating the battery in accordance with one of the claims 1 to 6, **characterised in that**, when there is no requirement for electric power, the feeding to the reactants (40, 50) into the fuel cells (2) is maintained at a low level, so that in this idling state, the temperature in the cells remains high, namely so high that a transfer from the idling state into a energy-delivering normal operating state is possible within a pre-given length of time, wherein this length of time is 10 minutes for example, preferably less than 1 minute.

8. A method in accordance with claim 7, **characterised in that** in the idling state the temperature of the cells (7) is less than in the energy-delivering normal operating state and that the difference between the temperatures in the normal operating state and in the idling state is advantageously less than 100° K.

9. The use of the battery in accordance with one of the claims 1 to 6, **characterised in that** it serves as a mobile energy source for electronic gadgets, which require a relatively high and regular energy supply, and/or that it serves as a substitution for re-loadable batteries.

## Revendications

1. Batterie à piles à combustible à oxyde solide, ou à SOFC, miniaturisées qui comprend les composants suivants:
une unité multimodulaire (20) composée de piles à combustible (2) comme modules, dont le volume est inférieur à 10⁻³ m³, de préférence inférieur à 10⁻⁴ m³,
un système (24, 25, 26) de canaux dans les canaux duquel, d'une part, des réactants, c'est-à-dire un combustible gazeux (50) et de l'air (40), peuvent être amenés aux piles (2), et d'autre part une postcombustion du combustible partiellement épuisé dans les piles est possible,
une enveloppe (10, 11) à structure au moins partiellement isolante,
un échangeur de chaleur (6) qui fait partie du système de canaux et dans lequel l'air d'admission peut être chauffé au moyen des gaz d'échappement (60),
un dispositif (4) ou moyen de transport de l'air,
un réservoir interchangeable ou rechargeable (5) pour le combustible qui y est stocké sous une pression qui est supérieure à la pression environnante et à laquelle le combustible est de préférence liquide,
des vannes commandées (51) dans des lignes de connexion pour les réactants, et
un dispositif de commande,
dans laquelle les piles à combustible contiennent chacune un électrolyte solide (30) en forme de disques qui comprend non seulement des composants conducteurs d'ions mais aussi des composants conducteurs d'électrons qui provoquent une perte ohmique, et dans laquelle le rapport entre les teneurs de ces composants est réglé d'une manière telle que, en fonctionnement à vide, une perte de chaleur à partir des piles vers l'environnement peut être compensée par la perte ohmique.

2. Batterie selon la revendication 1, **caractérisée en ce que** l'électrolyte solide se compose de Sr₄Fe₆O₁₃ dopé au La et/ou au Ti, qu'il est une pérowskite de la composition (La, Sr)(Co, Fe)O₃ ou qu'il est un oxyde de cérium dopé au Gd, Y et/ou Sm, dans laquelle le facteur de transfert des ions oxygène, mesuré à la température de fonctionnement avec un transport simultané des ions oxygène et des électrons, est compris entre 0,6 et 0,9, et **en ce que** des structures de support mécaniquement stables (2a, 2b) des électrolytes solides en forme de disques sont fabriquées en silicium cristallin qui a été structuré au moyen de procédés microtechniques.

3. Batterie selon la revendication 1 ou 2, **caractérisée en ce qu'**elle contient un condensateur (7), en particulier un super condensateur, qui permet d'absorber les pointes de consommation de puissance qui apparaissent en règle générale de façon intermittente, et **en ce que** le condensateur réalise au moins partiellement une isolation thermique dans l'enveloppe (10).

4. Batterie selon l'une quelconque des revendications précédentes, **caractérisée en ce qu'**il est possible d'engendrer une surpression dans les piles (2) à combustible et les canaux remplis de gaz au moyen d'organes (44, 46, 61, 62) qui permettent d'influer sur le transport de l'air (40) et des gaz d'échappement (60), et dans laquelle l'air d'admission induit en tant que puits de chaleur et que réactant, en coopération avec le combustible (50), un effet thermodynamique sur les gaz, et **en ce qu'**une partie de l'énergie de pression, qui est stockée dans les gaz d'échappement est utilisée dans le dispositif (4) de transport de l'air.

5. Batterie selon l'une quelconque des revendications précédentes, **caractérisée en ce que** le combustible (50) est du butane ou du propane.

6. Batterie selon l'une quelconque des revendications 1 à 5, **Caractérisée en ce qu'**elle présente une capacité définie par la quantité de combustible, **en ce que** la capacité de la batterie (1) est au moins de 3.000 mAh lorsque le réservoir de combustible (5) est plein, **en ce que** les piles à combustible (2) montées en série engendrent une tension aux bornes de 3,6 V et **en ce que** le diamètre de la batterie est compris entre 2 et 3 cm et sa hauteur entre 2,5 et 3,5 cm.

7. Procédé de mise en oeuvre de la batterie conforme à l'une quelconque des revendications précédentes, **caractérisé en ce que** l'alimentation en réactants (40, 50) dans les piles à combustible (2) peut être maintenue à un faible niveau en l'absence de consommation d'énergie électrique, d'une manière telle que la température dans les piles reste encore élevée dans ce fonctionnement à vide, c'est-à-dire suffisamment élevée pour qu'un passage d'un fonctionnement à vide à un fonctionnement normal fournissant de l'énergie est possible en un laps de temps prédéterminé, ce laps de temps étant par exemple de 10 minutes, de préférence de moins de 1 minute.

8. Procédé selon la revendication 7, **caractérisé en ce que** la température des piles (2) est plus faible en fonctionnement à vide qu'en fonctionnement normal fournissant de l'énergie, et **en ce que** la différence entre les températures de fonctionnement normal et de fonctionnement à vide est de préférence inférieure à 100 K.

9. Utilisation de la batterie conforme à l'une quelconque des revendications 1 à 8, **caractérisée en ce qu'**elle sert de source d'énergie mobile pour des dispositifs électroniques qui exigent une alimentation en énergie relativement élevée et régulière et/ou **en ce qu'**elle sert de substitution à des batteries rechargeables.
